(19) Europäisches Patentamt
European Patent Office
Office européen des brevets

(11) **EP 3 904 777 B1**

(12) **EUROPEAN PATENT SPECIFICATION**

(45) Date of publication and mention
of the grant of the patent:
**25.10.2023 Bulletin 2023/43**

(21) Application number: **21169595.2**

(22) Date of filing: **21.04.2021**

(51) International Patent Classification (IPC):
**F24F 11/41** *(2018.01)*          **F24F 11/65** *(2018.01)*
**F24F 11/62** *(2018.01)*          **F24F 11/42** *(2018.01)*
F24F 110/10 *(2018.01)*         F24F 110/12 *(2018.01)*
F24F 130/00 *(2018.01)*         F24F 140/20 *(2018.01)*
F24F 140/00 *(2018.01)*

(52) Cooperative Patent Classification (CPC):
**F24F 11/42; F24F 11/62; F24F 11/65;**
F24F 2110/10; F24F 2110/12; F24F 2130/00;
F24F 2140/00; F24F 2140/20

(54) **AIR-CONDITIONER SYSTEM AND METHOD FOR OPERATING THE SAME**

KLIMAANLAGENSYSTEM UND VERFAHREN ZUM BETRIEB DAVON

SYSTÈME DE CONDITIONNEMENT D'AIR ET SON PROCÉDÉ DE FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2020 KR 20200050775**

(43) Date of publication of application:
**03.11.2021 Bulletin 2021/44**

(73) Proprietor: **LG Electronics Inc.
Seoul 07336 (KR)**

(72) Inventor: **KANG, Kyungwon
08592 Seoul (KR)**

(74) Representative: **Vossius & Partner
Patentanwälte Rechtsanwälte mbB
Siebertstraße 3
81675 München (DE)**

(56) References cited:
EP-A1- 2 757 327          CN-A- 101 929 755
CN-A- 109 469 962          CN-A- 110 715 401

EP 3 904 777 B1

## Description

## BACKGROUND OF THE INVENTION

### 1. Field of the invention

The present invention relates to an air conditioner system and a method of operating the same, and more particularly, to an air conditioner system for performing a defrost operation by detecting a frosting of a heat exchanger, and a method of operating the same.

### 2. Description of the Related Art

An air conditioner is installed to provide a more comfortable indoor environment to humans by discharging cold and hot air into the room to adjust the indoor temperature and purify the indoor air so as to create a comfortable indoor environment.

In general, an air conditioner includes an indoor unit that is configured of a heat exchanger and installed indoors, and an outdoor unit configured of a compressor and a heat exchanger to supply a refrigerant to the indoor unit.

The air conditioner is separated into and controlled as an indoor unit composed of a heat exchanger and an outdoor unit composed of a compressor and a heat exchanger, the outdoor unit and the indoor unit are connected by a refrigerant pipe, the refrigerant compressed by the compressor of the outdoor unit is supplied to the heat exchanger of the indoor unit through the refrigerant pipe, and the refrigerant heat-exchanged in the heat exchanger of the indoor unit is introduced again into the compressor of the outdoor unit through the refrigerant pipe. Accordingly, the indoor unit discharges hot and cold air into the room through heat exchange using a refrigerant.

As described above, the refrigerant circulates in the air conditioner, and in the process of heat exchange, the air conditioner discharges cold air or hot air to operate in cooling or heating.

When the air conditioner performs a heating operation for a certain period of time or longer, freezing occurs in the outdoor heat exchanger operating as an evaporator. Accordingly, there is a problem in that heating efficiency is reduced.

Therefore, the air conditioner often performs the defrost operation for a certain period of time when a threshold setting condition is satisfied.

For example, when the refrigerant suction superheat degree value reaches a preset value, Korean Patent Publication No. 10-2014-0110355 (published date 2014.09.17) discloses to perform a defrost operation as it is determined to be frosting.

In addition, Korean Patent Publication No. 10-2018-0124556 (published date 2018.11.21) discloses to check whether the shielding rate calculated based on the outdoor heat exchanger temperature measured by a outdoor heat exchanger temperature sensor is higher than a reference value, and perform defrost operation.

As described above, simple threshold-based logics of specific values, such as refrigerant suction superheat degree and shielding rate, are often difficult to detect an actual frosting phenomenon, even if the actual frosting phenomenon occurs when an observation value does not reach the threshold in a threshold boundary area. In addition, since a cycle change is gradually occurred after the actual frosting is occurred, it was difficult to immediately detect the actual frosting by using simple threshold-based logics.

When the defrost operation is performed, a set operation is not performed in indoors. Accordingly, there is a problem in that it causes inconvenience to a user when the defrost operation is performed too often or performed for a long time.

However, since a conventional air conditioner is set to perform defrost operation for a certain period of time when operated for a specified time regardless of the surrounding environment, defrost operation may be unnecessarily performed or be performed too late. Accordingly, there is a problem in that operation efficiency is greatly degraded.

CN 110 715 401 A discloses a defrosting control method and device of an air conditioning device, a medium and the air conditioning device.

## SUMMARY OF THE INVENTION

The invention is defined in the independent claims. Dependent claims describe preferred embodiments.

The present invention has been made in view of the above problems, and provides an air conditioner system capable of accurately determining whether a heat exchanger is frosted, and a method of operating the same.

The present invention provides an air conditioner system capable of improving heat exchange and heating efficiency by appropriately performing a defrost operation, and a method of operating the same.

The present invention further provides an air conditioner system capable of increasing the efficiency of heating operation by reducing the number of start of defrost operation by predicting the timing of starting the frosting, and a method of operating the same.

The present invention further provides an air conditioner system capable of increasing the efficiency of heating operation by reducing the frosting of heat exchanger by predicting the frosting start timing, and a method of operating the same.

In order to achieve the above or other objects, an air conditioner system and an operation method thereof according to the invention determine whether a frosting is occurred based on image data of an outdoor heat exchanger, and predict the frosting timing based on sensing data detected by sensors, thereby accurately determining whether frosting is occurred and preventing frosting.

In order to achieve the above or other objects, an air conditioner system and an operation method thereof according to the invention determine whether a frosting is occurred based on image data of an outdoor heat exchanger, and predict the frosting timing based on sensing data detected by sensors, thereby accurately determining whether frosting is occurred and preventing frosting.

In accordance with an embodiment of the present invention, an air conditioner comprising a compressor, an outdoor heat exchanger configured to perform heat exchange using a refrigerant discharged from the compressor, a camera module configured to photograph the outdoor heat exchanger, a sensing unit which has a plurality of sensors, and a communication unit configured to transmit an image of the outdoor heat exchanger photographed by the camera module and sensing data detected by the sensing unit; and a server comprising a communication unit configured to receive the image of the outdoor heat exchanger photographed by the camera module and the sensing data detected by the sensing unit, and a defrost controller configured to determine whether the outdoor heat exchanger is frosted based on image data of the outdoor heat exchanger photographed by the camera module, and predict a frosting timing based on the sensing data detected by the sensing unit.

Meanwhile, the defrost controller includes a frosting detection unit configured to classify the image data of the outdoor heat exchanger into image data of frosting and normal states, by using a Convolutional Neural Network (CNN)-based image classification model; and a frosting start timing prediction unit configured to predict a remaining time until frosting, by using one or more machine learning models, when cycle operation data of the air conditioner is input.

In addition, the defrost controller further includes a defrost control unit configured to control the air conditioner to perform a defrost operation when the frosting detection unit determines as a frosting state; and a frosting prevention control unit configured to control to perform a frosting prevention operation, when the remaining time until frosting predicted by the frosting start timing prediction unit is less than or equal to a threshold value.

In addition, the air conditioner system is configured such that in the defrost operation, when the air conditioner was in a heating operation, the air conditioner is switched to a cooling operation to operate until the frosting detection unit determines as a normal state.

In addition, in the frosting prevention operation, the compressor is driven at an operating frequency lower than an operating frequency of the compressor of a normal state.

In addition, the communication unit of the server transmits a control signal output from the defrost control unit or the frosting prevention control unit to the air conditioner, and the air conditioner performs the defrost operation or the frosting prevention operation based on a control signal received from the server.

In addition, the defrost controller includes an error code output unit configured to generate a corresponding error code, when the defrost operation or the frost prevention operation is performed; and a memory configured to store the error code.

Meanwhile, the defrost controller further includes a data receiving unit configured to convert a pixel size and gray scale of the image data of the outdoor heat exchanger.

The data receiving unit receives the sensing data from the sensing unit every set sampling cycle, and removes noise.

Meanwhile, the air conditioner system in accordance with an aspect of the present invention further includes an edge configured to convert a pixel size and gray scale of the image data of the outdoor heat exchanger.

The edge receives the sensing data from the sensing unit every set sampling cycle, and removes noise.

In addition, the air conditioner system in accordance with an aspect of the present invention further includes a display unit configured to display a corresponding error code, when the defrost operation or the frosting prevention operation is performed; and a memory configured to store the error code.

Meanwhile, the controller further comprises a data receiving unit configured to convert a pixel size and gray scale of image data of the outdoor heat exchanger, and removes noise of the sensing data.

In accordance with another aspect of the present invention, a method of operating an air conditioner system is defined in claim 8. In particular, it includes: determining whether an outdoor heat exchanger is frosted based on image data of the outdoor heat exchanger photographed by a camera module; performing a defrost operation when the outdoor heat exchanger is determined to be in a frosting state; predicting a frosting timing based on sensing data detected by a plurality of sensors; and performing a frosting prevention operation when a remaining time until frosting predicted by a frosting start timing prediction unit is less than or equal to a threshold value.

Meanwhile, determining whether an outdoor heat exchanger is frosted includes classifying image data of the outdoor heat exchanger into image data of frosting and normal states, by using a Convolutional Neural Network (CNN)-based image classification model, and predicting a frosting timing includes predicting a remaining time until frosting, by using one or more machine learning models, when cycle operation data of the air conditioner is input.

Meanwhile, a method of operating an air conditioner system in accordance with an aspect of the present invention further includes generating a corresponding error code when the defrost operation or the frosting prevention operation is performed; and storing the error code.

Meanwhile, in the defrost operation, when the air conditioner was in a heating operation, the air conditioner is switched to a cooling operation to operate until the frosting detection unit determines as a normal state, and in the frosting prevention operation, the compressor is driven at an operating frequency lower than an operating frequency of the compressor of a normal state.

Meanwhile, a method of operating an air conditioner system in accordance with another aspect of the present invention further includes converting a pixel size and gray scale of the image data of the outdoor heat exchanger; and removing noise of the sensing data.

## BRIEF DESCRIPTION OF THE DRAWINGS

The above and other objects, features and advantages of the present invention will be more apparent from the following detailed description in conjunction with the accompanying drawings, in which:

FIG. 1 is a diagram illustrating a configuration of an air conditioner according to an embodiment of the present invention;

FIG. 2 is a schematic diagram of an outdoor unit and an indoor unit of FIG. 1;

FIG. 3 is a simplified internal block diagram of the air conditioner of FIG. 1;

FIGS. 4 and 5 are diagrams illustrating a configuration of an air conditioner system according to an embodiment of the present invention;

FIG. 6 is a simplified internal block diagram of a defrost control device according to an embodiment of the present invention;

FIG. 7 is a simplified internal block diagram of an air conditioner system server according to an embodiment of the present invention;

FIGS. 8 and 9 are diagrams referred to for explaining a deep learning;

FIG. 10 is a diagram referred to for explaining an operation of an air conditioner system according to an embodiment of the present invention;

FIG. 11 is a flowchart illustrating a method of operating an air conditioner system according to an embodiment of the present invention;

FIG. 12 is a flowchart illustrating a method of operating an air conditioner system according to an embodiment of the present invention; and

FIG. 13 is a diagram referred to for explaining a method of operating an air conditioner system according to an embodiment of the present invention.

## DETAILED DESCRIPTION OF THE PREFERRED EMBODIMENTS

Hereinafter, exemplary embodiments of the present invention will be described in detail with reference to the accompanying drawings. However, it is obvious that the present invention is not limited to these embodiments and may be modified in various forms within the scope of the claims.

In the drawings, in order to clearly and briefly describe the present invention, illustration of parts irrelevant to the description is omitted, and the same reference numerals are used for identical or extremely similar parts throughout the specification.

Meanwhile, the suffixes "module" and "unit" for the constituent elements used in the following description are given only in consideration of ease in preparation of the specification, and do not impart a particularly important meaning or role by themselves. Accordingly, the "module" and "unit" may be used interchangeably with each other.

In addition, in the present specification, terms such as first and second may be used to describe various elements, but these elements are not limited by these terms. These terms are only used to distinguish one element from another.

An air conditioner system according to an embodiment of the present invention includes one or more air conditioners. In addition, the air conditioner system according to an embodiment of the present invention includes other apparatuses including at least a server in addition to the air conditioner. In this case, the apparatuses included in the air conditioner system have a communication module to communicate with other devices via wire/wireless communication and perform an associated operation.

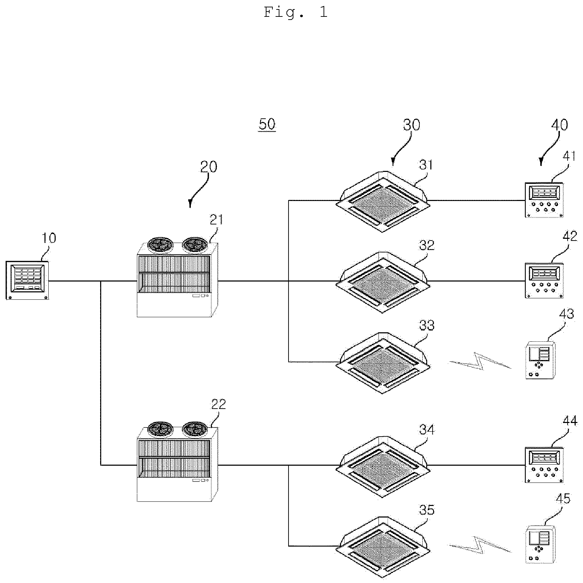

FIG. 1 is a diagram illustrating a configuration of an air conditioner according to an embodiment of the present invention.

Referring to FIG. 1, an air conditioner 50 according to an embodiment of the present invention may include a plurality of units. For example, the air conditioner 50 according to an embodiment of the present invention may include an indoor unit 30 and an outdoor unit 20. In addition, the air conditioner 50 according to an embodiment of the present invention may further include a remote controller 40 connected to the indoor unit and a central controller 10 capable of controlling units inside the air conditioner.

The air conditioner 50 according to an embodiment of the present invention may include indoor units 31 to 35, outdoor units 21 and 22 connected to the indoor units 31 to 35, and a remote control 41 to 45 connected to the indoor units 31 to 35 respectively. In addition, the air conditioner 50 according to an embodiment of the present invention may further include a central controller 10 that controls a plurality of indoor units 31 to 35 and outdoor units 21 and 22.

The central controller 10 may be connected to a plurality of indoor units 31 to 36 and a plurality of outdoor units 21 and 22 to monitor and control the operation of the indoor units and outdoor units. In this case, the central controller 10 may be connected to a plurality of indoor units to perform operation setting, lock setting, schedule control, group control, and the like for the indoor unit.

As the air conditioner, any of a stand type air conditioner, a wall-mounted type air conditioner, and a ceiling type air conditioner can be applied, but for convenience of explanation, a ceiling type air conditioner is described by way of illustration. In addition, the air conditioner may further include at least one of a ventilation device, an air purifier, a humidifier, and a heater, and may operate in conjunction with the operation of the indoor unit and the outdoor unit.

The outdoor unit 21, 22 includes a compressor (not shown) that receives and compresses a refrigerant, an outdoor heat exchanger (not shown) that exchanges heat with the refrigerant and outdoor air, an accumulator (not shown) that extracts gaseous refrigerant from the supplied refrigerant and supplies the extracted refrigerant to the compressor, and a four-way valve (not shown) that selects a flow path of the refrigerant according to the heating operation. In addition, the outdoor unit 21, 22 may further include a plurality of sensors, a valve, and an oil recovery device.

The outdoor unit 21, 22 operates the provided compressor and outdoor heat exchanger to compress or heat exchange the refrigerant according to a setting and supplies the refrigerant to the indoor unit 31, 35.

The outdoor unit 21, 22 is driven by the request of the central controller 10 or the indoor unit 31, 35, and as the cooling/heating capacity varies in correspondence with the driven indoor unit, the number of operations of the outdoor unit and the number of operations of the compressor installed in the outdoor unit are varied.

At this time, it is basically illustrated that the plurality of outdoor units 21 and 22 supply refrigerant to each connected indoor unit, but a plurality of outdoor units may be interconnected according to the connection structure of the outdoor unit and the indoor unit and supply the refrigerant to the plurality of indoor units.

The indoor unit 31, 35 is connected to any one of the plurality of outdoor units 21 and 22 to receive a refrigerant and discharge hot and cold air into the room. The indoor unit 31 to 35 includes an indoor heat exchanger (not shown), an indoor unit fan (not shown), an expansion valve (not shown) through which the supplied refrigerant is expanded, and a plurality of sensors (not shown).

At this time, the outdoor unit 21, 22 and the indoor unit 31 to 35 are connected through a communication line to transmit and receive data, and the outdoor unit and the indoor unit are connected to the central controller 10 by a separate communication line to operate according to the control of the central controller 10.

The remote controller 41 to 45 is connected to each indoor unit, inputs a user's control command to the indoor unit, and receives and displays state information of the indoor unit. In this case, the remote controller communicates by wire or wirelessly according to the connection type with the indoor unit, and in some cases, a single remote controller is connected to the plurality of indoor units, and settings of the plurality of indoor units may be changed through a single remote control input.

Meanwhile, according to an embodiment, the remote controller 41 to 45 may include various sensors such as a temperature sensor therein.

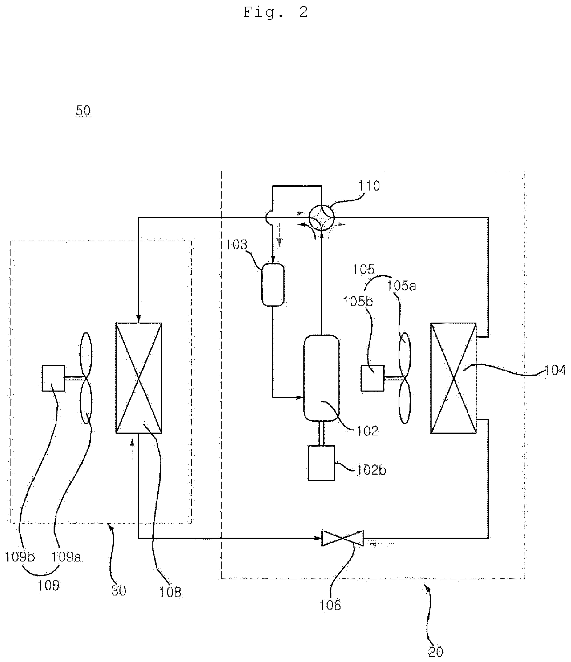

FIG. 2 is a schematic diagram of an outdoor unit and an indoor unit of FIG. 1.

Referring to FIG. 2, the air conditioner 50 is briefly divided into an indoor unit 30 and an outdoor unit 20.

The indoor unit 30 includes an indoor heat exchanger 108 that is disposed indoors and performs a cooling/heating function, an indoor blower 109 composed of an indoor fan 109a that is disposed in one side of the indoor heat exchanger 108 and promotes heat dissipation of a refrigerant, and an electric motor 109b that rotates the indoor fan 109a, and the like.

At least one indoor heat exchanger 108 may be installed. At least one of an inverter compressor and a constant speed compressor may be used as the compressor 102.

In addition, the air conditioner 50 may be configured as a cooler that cools the room, or may be configured as a heat pump that cools or heats the room.

The outdoor unit 20 includes a compressor 102 that serves to compress a refrigerant, a compressor motor 102b that drives the compressor, an outdoor heat exchanger 104 that serves to dissipate the compressed refrigerant, an outdoor blower 105 composed of an outdoor fan 105a that is disposed in one side of the outdoor heat exchanger 104 and promotes heat dissipation of the refrigerant and an electric motor 105b that rotates the outdoor fan 105a, an expansion mechanism 106 that expands a condensed refrigerant, a cooling/heating switching valve 110 that changes the flow path of the compressed refrigerant, an accumulator 103 that temporarily stores the gasified refrigerant to remove moisture and foreign substances, and then supplies a refrigerant having a constant pressure to the compressor, and the like.

Meanwhile, FIG. 2 illustrates a single indoor unit 30 and a single outdoor unit 20, but the driving device of the air conditioner according to an embodiment of the present invention is not limited thereto, and it is obvious that it can be applied to a multi-type air conditioner including a plurality of indoor units and outdoor units, an air conditioner having a single indoor unit and a plurality of outdoor units, and the like.

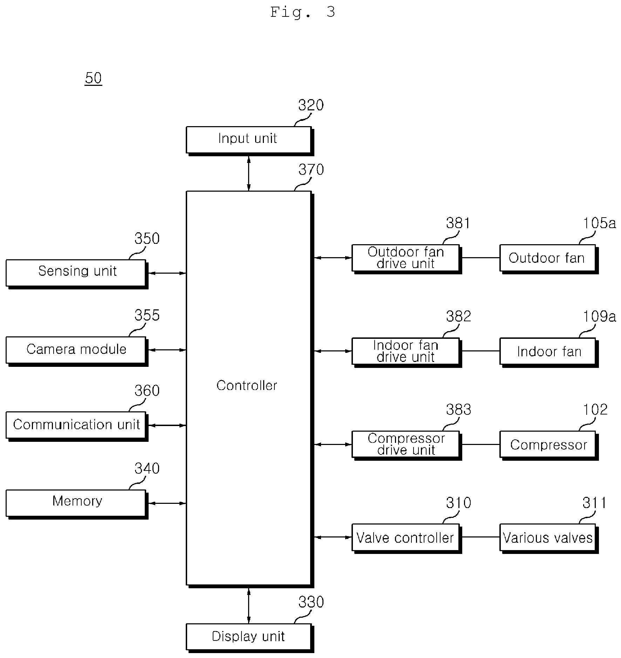

FIG. 3 is a simplified internal block diagram of the air conditioner of FIG. 1.

Referring to FIG. 3, the air conditioner 50 includes a compressor 102, a sensing unit 350, a camera module 355, a communication unit 360, and may include a memory 340, an outdoor fan 105a, a controller 370, and an indoor fan 109a. In addition, the air conditioner 50 may further include a compressor drive unit 383, an outdoor fan drive unit 381, an indoor fan drive unit 382, various valves 311 such as a switching valve and an expansion valve, a display unit 330, and an input unit 320.

The compressor 102, the outdoor fan 105a, the indoor fan 109a, and the like may operate as described above with reference to FIGS. 1 and 2.

The input unit 320 is provided with a plurality of operation buttons, and transmits a signal for the input operating target temperature of the air conditioner to the controller 370.

The display unit 330 may display an operating state of the air conditioner 50. For example, the display unit 330 may include a display means for outputting an operating state of the indoor unit 20, and display an operating state and an error.

The display unit 330 may display a wiring status between the indoor unit 20 and the outdoor unit 30. For example, the display unit 330 may include a light emitting diode LED, and the light emitting diode LED may be turned on when the wiring status of a communication line and/or a power line is normal, and may be turned off when the wiring status of the communication line and/or the power line is abnormal.

The sensing unit 350 includes a plurality of sensors to obtain data related to the operation and state of the air conditioner 50. The sensing unit 350 may be provided with various sensors to obtain cycle operation data.

For example, the sensing unit 350 may include a plurality of temperature sensors. A discharge temperature sensing unit may detect a refrigerant discharge temperature from the compressor 102 and transmit a signal for the detected refrigerant discharge temperature to the controller 370. An outdoor temperature detection unit may detect an outdoor temperature, which is a temperature around the outdoor unit 30 of the air conditioner 50, and may transmit a signal for the detected outdoor temperature to the controller 370. An indoor temperature sensing unit may detect an indoor temperature, which is the temperature around the indoor unit 20 of the air conditioner 50, and may transmit a signal for the detected indoor temperature to the controller 370.

The controller 370 may control the air conditioner 50 to operate, based on the input target temperature, and at least one of the detected refrigerant discharge temperature, the detected outdoor temperature, and the detected indoor temperature. For example, the controller 370 may control the air conditioner 50 to operate, by calculating a final target superheat degree.

In addition, the sensing unit 350 may include a humidity sensor, a pressure sensor, and other sensors capable of acquiring data related to the operation and state of the air conditioner 50, and may transmit sensing data of the sensors to the controller 370.

The controller 370 may control the air conditioner 50 based on sensing data detected by the sensing unit 350.

Meanwhile, for controlling the operation of the compressor 102, the indoor fan 109a, and the outdoor fan 105a, as shown in the drawing, the controller 370 may control the compressor drive unit 383, the outdoor fan drive unit 381, the indoor fan drive unit 382, and a valve controller 310, respectively.

For example, the controller 370 may output a corresponding speed command value signal to the compressor drive unit 383, the outdoor fan drive unit 381, or the indoor fan drive unit 382, respectively, based on a target temperature.

Further, based on each speed command value signal, the compressor motor 102b, the outdoor fan motor 105b, and the indoor fan motor 109b may be operated at a target rotational speed, respectively.

Meanwhile, the controller 370 may control the overall operation of the air conditioner 50, in addition to controlling the compressor drive unit 383, the outdoor fan drive unit 381, or the indoor fan drive unit 382.

For example, the controller 370 may control the operation of the cooling/heating switching valve or four-way valve 110 through the valve controller 310. Alternatively, the controller 370 may control the operation of the expansion mechanism or the expansion valve 106 through the valve controller 310.

Meanwhile, the air conditioner may further include a power supply unit (not shown) that supplies power to each unit such as the compressor 102, the outdoor fan 105a, the indoor fan 109a, the controller 370, and the memory 340.

The camera module 355 may include a digital camera. The digital camera may include at least one optical lens, an image sensor (e.g. a CMOS image sensor) configured to include a plurality of photodiodes (e.g. pixels) forming an image by a light that passed through the optical lens, and a digital signal processor DSP that forms an image based on signals output from the photodiodes. The digital signal processor is capable of generating not only a still image but also a moving image having frames composed of still images.

The camera module 355 obtains image data of the outdoor heat exchanger 104 by photographing the outdoor heat exchanger 104. The image data of the outdoor heat exchanger 104 photographed by the camera module 355 may be transmitted to other device such as the controller 370, but are at least transmitted to a server.

The memory 340 may store data necessary for operation and control of the air conditioner 50. In addition, the memory 340 may store image data obtained through the camera module 355 and sensing data obtained through the sensing unit 350.

The communication unit 360 may include one or more communication modules to transmit/receive with other device by wire or wirelessly.

The controller 370 may transmit state information of the air conditioner 50 to other device such as a server (not shown) through the communication unit 360. For example, the controller 370 may control the communication unit 360 so that image data obtained through the camera module 355 and sensing data obtained through the sensing unit 350 are transmitted to other device such as a server.

In addition, the controller 360 may control the air conditioner 50 based on a control signal and various data received from other device such as a server.

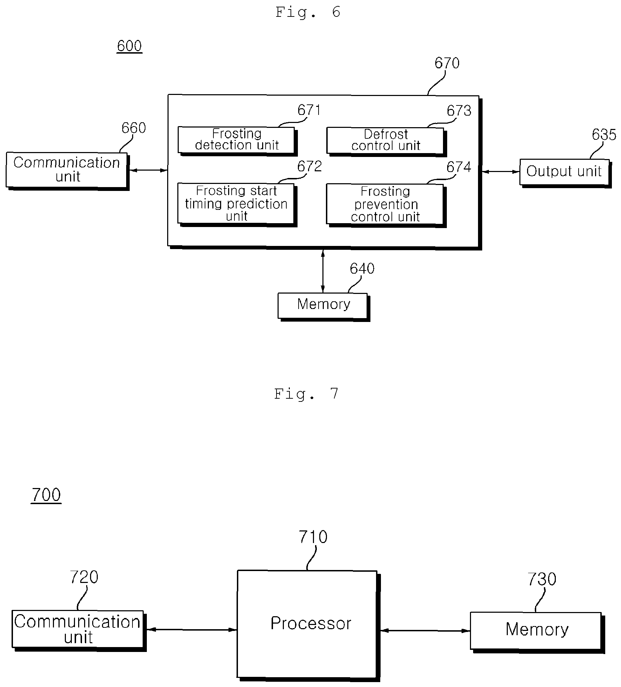

According to an embodiment, the air conditioner 50 may further include a defrost control device 600 which is described later with reference to FIG. 6 and the like. The air conditioner 50 includes at least a defrost controller 670. The defrost controller 670 may be implemented as a partial block of the controller 360 or as a separate block from the controller 360.

Accordingly, the air conditioner 50 determines whether the outdoor heat exchanger is frosted based on the image data of the outdoor heat exchanger photographed by the camera module 355, and predicts the timing of frosting based on the sensing data detected in the sensing unit 350.

According to an embodiment, the air conditioner 50 communicates with a server including the defrost control device 600 or at least the defrost controller 670 and performs a defrost operation and a frosting prevention control operation.

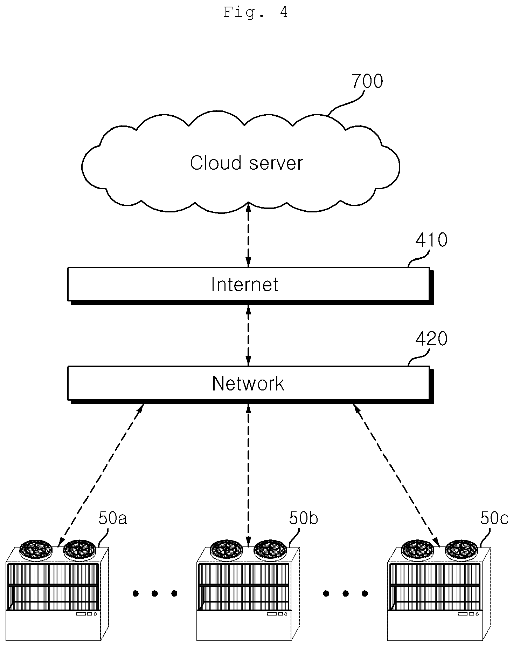

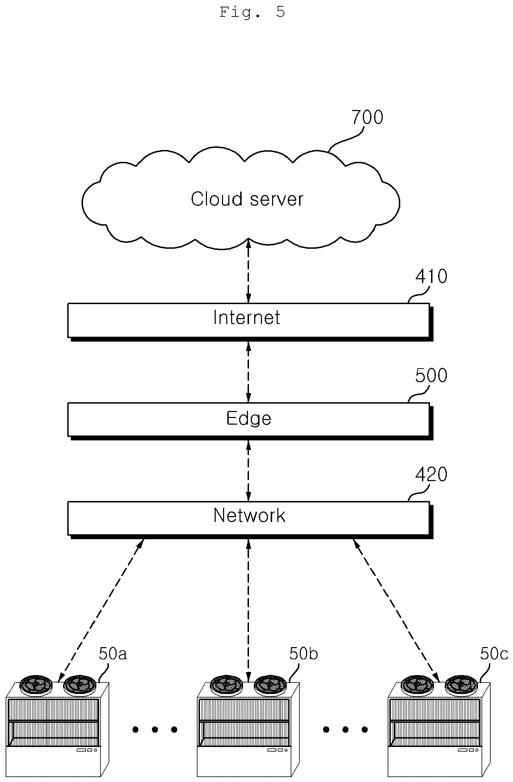

FIGS. 4 and 5 are diagrams illustrating a configuration of an air conditioner system according to an embodiment of the present invention.

Referring to FIG. 4, an air conditioner system according to an embodiment of the present invention includes one or more air conditioners 50a, 50b, 50c and a server 700.

The air conditioner 50a, 50b, 50c may access Internet 410 through a network 420 such as a gateway, and transmit and receive data with the server 700. The air conditioners 50a, 50b, and 50c transmit image data obtained through the camera module 355 and sensing data obtained through the sensing unit 350 to the server 700, and perform a defrost operation and a frosting prevention control operation based on data received from the server 700.

The server 700 may be a server operated by a manufacturer of the air conditioner 50a, 50b, 50c or a company entrusted with a service by the manufacturer, or may be a kind of cloud server.

The server 700 may include a defrost control device 600 which will be described later with reference to FIG. 6. Alternatively, the server 700 may include at least defrost controller 670.

Accordingly, the server 700 determines whether the outdoor heat exchanger is frosted based on the image data of the outdoor heat exchanger photographed by the camera module 355, and predicts the timing of frosting based on the sensing data detected by the sensing unit 350.

Referring to FIG. 5, in order to overcome the limitations of data processing speed and capacity, the air conditioner system according to an embodiment of the present invention may further include an edge 500.

If the server 700 determines whether frosting has occurred, predicts the start timing of frosting, and performs defrost control, and frosting prevention control while continuously processing the sensing data of a plurality of air conditioners 50a, 50b, 50c, there may occur an increase in data load and a decrease in processing speed.

Accordingly, the edge 500 may perform preprocessing of data for determining whether frosting has occurred and predicting the start timing of frosting.

For example, the edge 500 may convert the pixel size and gray scale of the image data of the outdoor heat exchanger received from the air conditioner 50a, 50b, 50c, remove a noise from the sensing data received from the air conditioner 50a, 50b, 50c, and then, transmit to the server 700.

Meanwhile, FIGS. 4 and 5 illustrate that there is a single server 700, but the present invention is not limited thereto. For example, the system according to the present invention may operate in conjunction with two or more servers.

FIG. 6 is a simplified internal block diagram of a defrost control device according to an embodiment of the present invention.

Referring to FIG. 6, the defrost control device 600 according to an embodiment of the present invention includes a defrost controller 670 that determines whether the outdoor heat exchanger 104 is frosted based on the image data of the outdoor heat exchanger 104, and predicts the frosting timing based on the sensing data detected in the sensing unit 350.

In addition, the defrost control device 600 according to an embodiment of the present invention may be configured as an independent modular device, and may be mounted inside the server 700 or the air conditioner 50 or connected by wired or wirelessly to be used. In this case, the defrost control device 600 may further include a communication unit 660.

In addition, the defrost control device 600 may further include a memory 640 which stores data. The memory 640 may store data received from the server 700 or the air conditioner 50, data obtained by processing or analyzing the received data, data necessary for the operation of the defrost control device 600, data related to various error codes, and the like.

According to an embodiment, the defrost control device 600 may further include its own output unit 635. For example, the output unit 635 may have a seven-segment display and output a code corresponding to a current state or a recognition result. Alternatively, the output unit 635 may be provided with a visual output means more than a seven-segment display or an audio output means.

Meanwhile, the defrost control device 600 receives image data and sensing data of the outdoor heat exchanger through the communication unit 660, and determines, through the defrost controller 670, whether the outdoor heat exchanger 104 is in a frosting state or a normal state based on the received data, and predicts the time when frosting occurs.

To this end, the defrost controller 670 uses a machine learning model that performs two different roles. It is possible to determine whether the air conditioner is frosted by using a machine learning model that discerns the current frosting of air conditioner, and it is possible to predict the next frosting occurrence time by using a machine learning model that predict the time when frosting will occur, thereby minimizing the defrost operation time and preventing the degradation of heating performance caused by the defrost operation.

Meanwhile, the defrost controller 670 includes a frosting detection unit 671 that classifies image data of the outdoor heat exchanger 104 into image data of frosting and normal states by using a Convolutional Neural Network (CNN)-based image classification model, and a frosting start timing prediction unit 672 that predicts the remaining time until frosting by using one or more machine learning models when the cycle operation data of the air conditioner 50 is input.

The frosting detection unit 671 serves to diagnose the current state of the air conditioner 50 by performing a task of classifying image data in frosting and normal states using a CNN-based image classification model, and may enable to start the defrost control when determining frosting, by adding the determination of frosting to the start condition of the defrost control logic.

When receiving the cycle operation data obtained from the sensing unit 350 in real time, the frosting start timing prediction unit 672 predicts a corresponding frosting timing and predicts the remaining time until frosting by using one or more machine learning models of Random Forest, Deep Neural Network (DNN), and CNN.

Meanwhile, the defrost controller 670 further includes a defrost control unit 673 for controlling the air conditioner 50 to perform the defrost operation when the frosting detection unit 671 determines the frosting state, and a frosting prevention control unit 674 that controls the air conditioner 50 to perform a frosting prevention operation, when the remaining time until the frosting predicted by the frosting start timing prediction unit is less than or equal to a threshold value. The control signals output from the defrost control unit 673 and the frosting prevention control unit 674 may be transmitted to the communication unit 360 of the air conditioner 50 through the communication unit 660. Alternatively, the control signal output from the defrost control unit 673 and the frosting prevention control unit 674 may be transmitted to the server 700, and the server 700 may transmit the control signal output from the defrost control unit 673 and the frosting prevention control unit 674 to the air conditioner 50.

Meanwhile, the control signal output from the defrost control unit 673 and the frosting prevention control unit 674 is transmitted to the controller 370 of the air conditioner 50, and the air conditioner 50 may perform the defrost operation and the frosting prevention operation based on the received control signal.

Meanwhile, the defrost operation is performed when the air conditioner 50 is in a heating operation and is in a frosting state, and is to perform a cooling operation for a certain time by switching the heating operation to the cooling operation. The defrost operation is performed until the frosting detection unit 671 determines the state of the outdoor heat exchanger 104 as a normal state.

Meanwhile, the frosting prevention operation is to drive the compressor 102 at an operation frequency lower than a compressor operation frequency in a normal state, thereby preventing the occurrence of a frosting state by operating the compressor 102 at an operation frequency lower than usual.

Meanwhile, the defrost control unit 673 starts the defrost operation when the frosting detection unit 671 determines that frosting has occurred, and operates to switch from the heating operation to the cooling operation. The defrost control cancel condition continues until the frosting detection unit determines that it is in a normal state.

The frosting prevention control unit 674 operates when the remaining time until the frosting starting predicted by the frosting start timing prediction unit 672 is within a threshold value, and starts the frosting prevention operation. The frosting prevention operation is canceled when the defrost operation starts or when the remaining time until the frosting starting is equal to or more than a set threshold value.

In the case of general multiple defrost operation logics, in order to determine whether a frosting is occurred in the heat exchanger, a rule-based determination logic is implemented and determines by capturing a physical phenomenon in the heating cycle that changes after the frosting occurs. Accordingly, the general defrost operation logic has a problem in that the defrost logic operates after the heat exchange efficiency has already deteriorated considerably as the defrost operation starts after a considerable period of time is elapsed after the actual frosting occurs, and has a disadvantage in that it takes a long time to reach a normal state by defrost operation as the frosting has already progressed considerably.

According to an embodiment of the present invention, defrost operation time can be minimized by determining whether the air conditioner 50 is frosted/normal and predicting the frosting start timing by using separate machine learning models, and degradation of heating performance due to defrost operation can be prevented.

According to an embodiment of the present invention, when a frosting occurs in the heat exchanger 104 through direct observation of an image obtained using the camera module 355, it is possible to quickly determine the frosting. That is, the artificial neural network determines whether the frosting has occurred through an image with the same logic and accuracy as the human eye checking that the frosting has occurred in the heat exchanger 104.

In the embodiment of the present invention, it is possible to quickly and accurately determine the frosting in comparison with the conventional technology by applying the frosting diagnosis technology through direct observation, away from a conventional technology that estimated the frosting based on the change of cycle factors.

In addition, according to an embodiment of the present invention, a more stable operation of the air conditioner can be achieved by reducing the number of occurrences of frosting by predicting the timing of frosting starting and previously reflecting the result to a controlling.

Unlike the conventional technology that determines simply whether a frosting has occurred and starts defrost operation, the embodiment of the present invention additionally introduces a technology that predicts the next frosting start time, thereby reducing the number of starting of defrost operation and the frosting of heat exchanger and increasing the efficiency of heating operation to reduce customer dissatisfaction due to defrost operation and improve product quality.

Meanwhile, according to an embodiment of the present invention, the defrost controller 670 may further include a data receiving unit (not shown) that converts the pixel size and gray scale of the image data of the outdoor heat exchanger 102 and removes noise of the sensing data.

The data receiving unit is a device that collects image data in frosting and normal states collected from the camera module 355 attached to the heat exchanger 104 of the outdoor unit 30, and operation data received from the temperature sensor, the humidity sensor, and the pressure sensor installed throughout the air conditioner 50 such as evaporator, condenser, and compressor 102, and may perform pre-processing tasks such as a noise removal of sensor signal, a pixel size adjustment, and a gray scale conversion through filter application.

Meanwhile, according to an embodiment of the present invention, the defrost controller 670 may further include an error code output unit (not shown) that generates an error code corresponding to the execution of the defrost operation or the frost prevention operation. Meanwhile, the generated error code may be stored in the memory 640.

The error code output unit may generate and store an error code in the internal memory 640 when the defrost control unit 673 starts the defrost operation or when the frosting prevention control unit 674 starts the frosting prevention operation. In addition, according to an embodiment, the error code output unit may output a corresponding error code to the display of the main PCB or the display of the control panel, and the error code display is also canceled when the defrost operation or the frost prevention operation is cancelled.

Meanwhile, according to an embodiment of the present invention, the air conditioner 50 may include at least some components of the defrost control device 600. For example, the defrost control device 600 may be mounted inside the air conditioner 50 or connected by wire or wirelessly to be used.

Alternatively, the air conditioner 50 may include the above mentioned defrost controller 670.

According to an embodiment, the defrost controller 670 may be implemented as a partial block of the controller 370. That is, the air conditioner system according to an embodiment of the present invention includes a compressor 102, an outdoor heat exchanger 104 that performs heat exchange using a refrigerant discharged from the compressor 102, a camera module 355 photographing the outdoor heat exchanger 104, a sensing unit 350 having a plurality of sensors, and a controller 370 that performs a defrost operation by determining whether the outdoor heat exchanger 104 is frosted based on the image of the outdoor heat exchanger 104 photographed by the camera module 355, and predicts the frosting time based on sensing data detected by the sensing unit 350.

According to an embodiment, the air conditioner 50 may further include a defrost controller 670 separate from the controller 370. That is, the air conditioner system according to an embodiment of the present invention includes a compressor 102, an outdoor heat exchanger 104 that performs heat exchange using a refrigerant discharged from the compressor 102, a camera module 355 photographing the outdoor heat exchanger 104, a sensing unit 350 having a plurality of sensors, and a defrost controller 670 that performs a defrost operation by determining whether the outdoor heat exchanger 104 is frosted based on the image of the outdoor heat exchanger 104 photographed by the camera module 355, and predicts the frosting timing based on sensing data detected by the sensing unit 350.

Meanwhile, when the air conditioner 50 includes the defrost controller 670, the memory 340 of the air conditioner 50 may perform the role of the memory 640 of the defrost control device 600. In addition, the role of the output unit 635 of the defrost control device 600 may be performed by the display unit 330 of the air conditioner 50 or the like. For example, when the defrost operation or the frosting prevention operation is performed, the display unit 330 may display a corresponding error code, and the memory 640 may store the error code.

Meanwhile, according to an embodiment of the present invention, as described with reference to FIGS. 4 and 5, the server 700 may include at least some components of the defrost control device 600.

For example, the defrost control device 600 may be mounted inside the server 700 or connected by wire or wirelessly to be used.

The air conditioner 50 includes the above mentioned defrost controller 670. That is, the air conditioner system according to an embodiment of the present invention includes a compressor 102, an outdoor heat exchanger 104 that performs heat exchange using a refrigerant discharged from the compressor 102, a camera module 355 that photographs the outdoor heat exchanger 104, a sensing unit 350 having a plurality of sensors, and an air conditioner 50 including a communication unit for transmitting an image of the outdoor heat exchanger 104 photographed by the camera module 355 and sensing data detected by the sensing unit 350 to the server 700, and a communication unit (see 720 in FIG. 7) that includes at least one communication module to receive an image of the outdoor heat exchanger 104 photographed by the camera module 355 and sensing data detected by the sensing unit 350, and a server 700 including the defrost controller 670 described above with reference to FIG. 6.

Referring to FIG. 7, the server 700 includes a communication unit 720, a processor 710, and a memory 730.

The processor 710 may control the overall operation of the server 700.

According to an embodiment, the processor 710 may be equipped with artificial neural networks (ANN) previously learned by machine learning to perform frosting recognition and the like. For example, the processor 710 may include a deep neural network (DNN) such as a convolutional neural network (CNN), a recurrent neural network (RNN), and a deep belief network (DBN) learned by deep learning. In this case, the defrost controller 670 may be implemented as a partial block of the processor 710. Meanwhile, the artificial neural network (ANN) may be implemented in the form of software or may be implemented in the form of hardware such as a chip.

Meanwhile, the server 700 may be a server operated by a manufacturer of the air conditioner 50 or a server operated by a service provider, or may be a kind of cloud server.

The communication unit 720 receives various data such as state information, operation information, and operation information from the air conditioner 50, a gateway, other electronic device, and the like.

In addition, the communication unit 720 may transmit data corresponding to various received information to the air conditioner 50, a gateway, other electronic device, and the like.

To this end, the communication unit 720 may include one or more communication modules such as an Internet module and a mobile communication module.

The memory 730 may store received information, and may have data for generating result information corresponding to the received information.

In addition, the memory 730 may store data and result data used for machine learning.

The memory 730 may store data necessary for the operation of the server 700.

For example, the memory 730 may store a learning algorithm to be performed by the server 700.

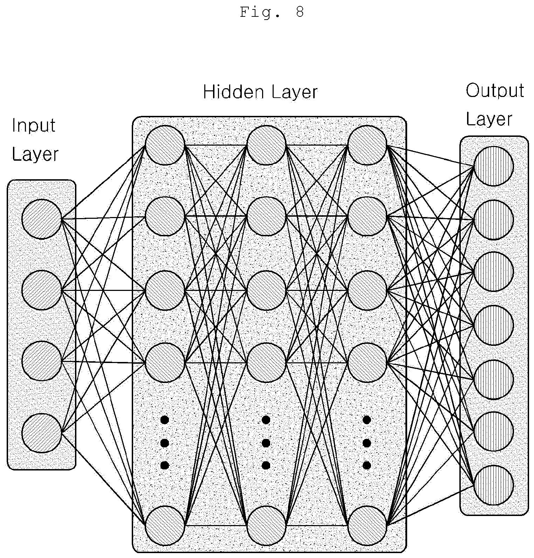

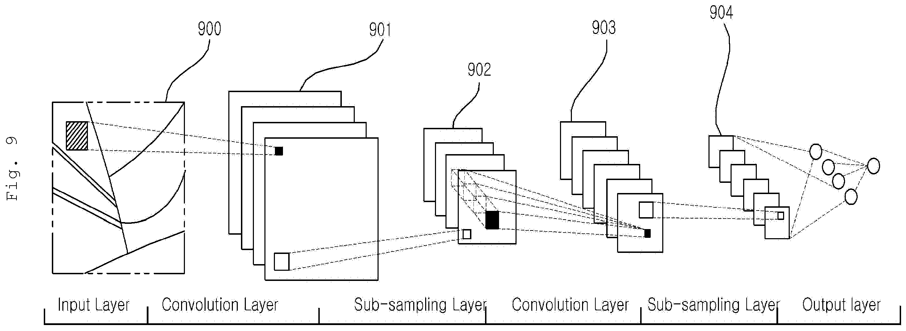

The learning algorithm at this time may be a learning algorithm based on a deep neural network as shown in FIGS. 8 and 9.

FIGS. 8 and 9 are diagrams referred to for explaining a deep learning.

Referring to FIG. 8, the processor 710 may perform learning by descending to a deep level in multiple stages based on data in a deep learning technology which is a kind of machine learning.

Deep learning may represent a set of machine learning algorithms that extract core data from a plurality of data while passing through hidden layers consecutively.

The deep learning structure may be composed of a deep neural network (DNN) such as CNN, RNN, and DBN.

The deep neural network (DNN) may include an input layer, a hidden layer, and an output layer.

Meanwhile, a configuration having multiple hidden layers may be referred to as a deep neural network (DNN).

Each layer includes a plurality of nodes, and each layer is related with the next layer. Nodes may be connected to each other with a weight.

An output from an arbitrary node belonging to a first hidden layer 1 becomes an input of at least one node belonging to a second hidden layer. In this case, the input of each node may be a value obtained by applying a weight to the output of the node of the previous layer. Weight may mean the strength of a connection between nodes. The deep learning process may be considered as a process of finding an appropriate weight.

Meanwhile, the learning of artificial neural network may be accomplished by adjusting the weight of a connection line between nodes (if necessary, adjusting a bias value) so that a desired output is produced for a given input. In addition, the artificial neural network may continuously update the weight value by learning.

FIG. 9 is a diagram illustrating a structure of a convolutional neural network (CNN) excellent for image processing.

CNN is a model that simulates human brain function, based on the assumption that when a person recognizes an object, he/she extracts basic features of the object, then performs complex calculations in the brain and recognizes the object based on the calculation result.

The CNN may also include an input layer, a hidden layer, and an output layer.

A certain image 900 is input to the input layer.

Referring to FIG. 9, a hidden layer is composed of a plurality of layers, and may include a convolution layer and a sub-sampling layer.

Basically, in CNN, various filters for extracting features of an image through a convolution operation and a pooling or non-linear activation function for adding non-linear features are used together.

Convolution is mainly used for filter calculation in the field of image processing, and is used to implement a filter for extracting features from an image.

For example, if the convolution operation is repeatedly performed for the entire image while moving the 3X3 window, an appropriate result can be obtained according to the weight value of the window.

The convolution layer may be used to perform convolution filtering for filtering information extracted from a previous layer by using a filter having a preset size.

The convolution layer performs a convolution operation on the input image data 900, 902 using a convolution filter, and generates a feature map 901, 903 in which the feature of the input image 900 is expressed.

As a result of convolutional filtering, filtered images as many as the number of filters may be generated according to the number of filters included in the convolution layer. The convolution layer may be composed of nodes included in filtered images.

In addition, the sub-sampling layer paired with the convolution layer may include the same number of feature maps as the paired convolution layer.

The sub-sampling layer reduces the dimension of the feature map 901, 903 through sampling or pooling.

The output layer recognizes the input image 900 by combining various features expressed in the feature map 904.

Frosting detection and frosting start time prediction according to the present invention may use various deep learning structures described above. For example, it is possible to determine whether the outdoor heat exchanger 104 is frosted by using a convolutional neural network (CNN) structure that is widely used in object recognition in an image.

Meanwhile, when the server 700 includes the defrost controller 670, the memory 730 of the server 700 may perform the role of the memory 640 of the defrost control device 600. In addition, the role of the communication unit 610 of the defrost control device 600 may be performed by the communication unit 720 of the server 700, or the like.

The air conditioner system according to an embodiment of the present invention uses a machine learning model of the frosting detection unit 671 and a machine learning model of the frosting start timing prediction unit 672 that have different purposes respectively.

The machine learning model of the frosting detection unit 671 is used to determine whether the outdoor heat exchanger 104 is frosted or normal, and the machine learning model of the frosting start timing prediction unit 672 is used to predict the frosting start timing, thereby minimizing the defrost operation time and preventing degradation of heating performance due to the defrost operation.

The air conditioner system according to an embodiment of the present invention may include at least a part (e.g. the defrost controller 670) of the defrost control device 600.

According to an embodiment, the defrost controller 670 may include a data receiving unit for preprocessing image data and sensing data. One of the embodiments using the server 700 may further include an edge 500 serving as a data processing unit in order to overcome limitations in data processing speed and capacity.

The data processing unit may receive operation data collected from various temperature sensors, humidity sensors, and pressure sensors installed in the compressor, condenser, and evaporator of the air conditioner, and other connecting pipe, and image data collected by the camera module 355 installed in the outdoor heat exchanger 104, and may proceed with the data preprocessing process.

The data processing unit may receive image data collected by the camera module 355 installed in the outdoor heat exchanger 104 in the form of a batch file every set sampling period.

The data processing unit may perform a data preprocessing process according to the input data format of the image classification model of the frosting detection unit 671 through gray scale conversion and pixel size adjustment of the received image data.

The data processing unit may receive operation data of the air conditioner 50 from the sensing unit 350, such as various temperature/humidity sensor and pressure sensor installed in the compressor, condenser, evaporator, and various places of the connection pipe, every set sampling cycle.

The data processing unit may perform a data preprocessing process that removes noise by applying a band-pass filter, a low/high-pass filter, etc. to the received operation data, and performs a normalization operation to uniformly adjust the scale for each factor to remove the degree of influence caused by each factor's scale difference, thereby improving the prediction performance of the frosting start timing prediction model.

Meanwhile, the data processing unit may transmit the image and operation data that completed the data pre-processing process to the frosting detection unit 671 and the frosting start timing prediction unit 672 respectively.

In some cases, the data processing unit may output the frosting and normal image of gray scale into an original image and a modified image to which a data augmentation scheme such as rotation and brightness change is applied.

The frosting detection unit 671 may determine whether the air conditioner 50 is frosted in real time or in a set determination cycle by using a CNN-based image classification model that reflects various installation environments of the field site where the outdoor unit 20 is actually installed by previously learning the modified image.

The frosting detection unit 671 receives the preprocessed image data from the data receiving unit as input data and performs a feed-forward operation on the frosting detection image classification model to classify whether a corresponding image is a frosting image or a normal image.

The execution trigger of the frosting detection unit 671 starts from a defrost control logic, and when the procedure for checking the start condition of the defrost control logic and the procedure for checking the defrost control cancel condition are performed according to a set cycle, it is possible to diagnose whether the current state of the air conditioner 50 is a frosting state by executing the frosting detection unit 671.

The frosting detection unit 671 determines whether frosting has occurred with respect to a specific number or more instances and obtains statistically meaningful diagnosis result, uses mode to derive a final determination result for various diagnosis results, and may always set the number of instances used in frosting determination to be an odd number so as to avoid a case in which the frosting determination result is in a tie state.

The frosting start timing prediction unit 672 predicts the frosting occurrence timing in real time or in a preset prediction cycle by using one or more machine learning models among Random Forest, DNN, and CNN that previously learned frosting data and normal data obtained by subdividing and labeling the air conditioner operation data at the time of the frosting occurrence by minute until two hours before the frosting occurrence.

The frosting start timing prediction unit 672 may receive the pre-processed operation data from the data receiving unit as input data and performs a feed-forward operation on the frosting start timing prediction model, and may perform the task of predicting the remaining time until the frosting start timing by minute based on the pattern of a corresponding operation data.

The execution trigger of the frosting start timing prediction unit 672 starts from a frosting prevention control logic, and when the procedure for checking the start condition of the frosting prevention control logic and the procedure for checking the frosting prevention control cancel condition are performed according to a set cycle, it is possible to predict the expected frosting start timing of the air conditioner 50 by executing the frosting start timing prediction unit 672.

The frosting start timing prediction unit 672 may predict the frosting start timing for a specific number of instances or more to obtain a statistically meaningful prediction result, and may select the average value of the remaining prediction results excluding the maximum and minimum values as a final prediction value of a corresponding frosting start timing calculation cycle. At this time, the mean and standard deviation, which are the probability distributions of the prediction results, are calculated, and if the variance value is greater than or equal to a set threshold, it is determined that the final prediction result is not reliable, so that determination is withheld at a corresponding frosting start timing prediction cycle, and the prediction operation may be performed again in the next prediction cycle.

If it is determined that frosting has occurred, the defrost control unit 673 starts a defrost operation and operate to switch from a heating operation to a cooling operation to remove the frosting of the outdoor heat exchanger 104. Meanwhile, the error code output unit may receive a defrost operation mode flag at the timing of starting the defrost operation to generate an error code, may store the error code in the memory 640, and may output a defrost operation code on the display of the output unit 635.

The defrost control unit 673 executes the frosting detection unit 671 every set frosting determination cycle to determine whether the air conditioner 50 is frosted, and cancels the defrost operation and operates to switch again from cooling operation to heating operation when the frosting detection unit 671 determines that it is in a normal state.

When the time remaining time until the predicted frosting starting is within a threshold value, the frosting prevention control unit 674 begins the frosting prevention operation to prevent the outdoor heat exchanger 104 from frosting. Meanwhile, the error code output unit may receive a frosting prevention operation mode flag at the timing of starting a frosting prevention operation, generate an error code, store the error code in the memory 640, and output the frosting prevention operation code on the display of the output unit 635.

The frosting prevention control operation is an operation of aiming to delay the frosting of the outdoor heat exchanger 104 as much as possible by setting the compressor frequency to be lower than the control target frequency during normal operation.

The frosting prevention control unit 674 may execute the prediction of the frosting start timing every set frosting start timing prediction cycle, and cancel the frosting prevention operation when the next frosting start timing of the air conditioner 50 is equal to or greater than a set threshold.

If the defrost operation is in progress, the frosting prevention control unit 674 holds the execution of the frosting prevention control operation, and may hold the check of the condition for starting the frosting prevention control if a defrost operation flag is generated at the time when the frosting prevention control is executed. If the defrost control and the frost prevention control start simultaneously, the defrost control may have control priority.

Meanwhile, when the defrost operation is canceled by the defrost control unit 673, when the frosting prevention operation is canceled by the frosting prevention control unit 674, the heating operation flag is generated, and the error code output unit receives a corresponding flag to cancel the display of error code of the defrost operation and frosting prevention operation.

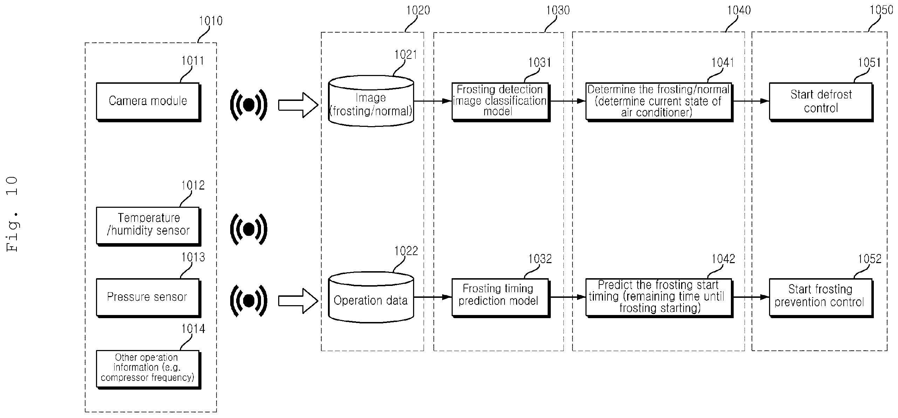

FIG. 10 is a diagram referred to for explaining an operation of an air conditioner system according to an embodiment of the present invention.

The air conditioner system according to an embodiment of the present invention obtains data for defrost control through a detection means 1010 disposed in the air conditioner 50 side. Accordingly, a camera module 1011 installed in the outdoor heat exchanger 104 side may photograph the outdoor heat exchanger 104 to obtain image data, a temperature/humidity sensor 1012 of the sensing unit 350 may obtain temperature/humidity data, a pressure sensor 1013 may obtain pressure data, and other sensors 1014 may obtain other operation information such as a compressor frequency.

Meanwhile, in the air conditioner system according to an embodiment of the present invention, the defrost controller 670 may determine whether the air conditioner 50 is frosted and may perform a frosting timing prediction 1040. For example, the frosting detection unit 671 may determine 1041 whether the outdoor heat exchanger 104 is frosted based on image data of the outdoor heat exchanger 104 photographed by the camera module 355. In addition, the frosting start timing prediction unit 672 may predict 1042 the frosting timing based on sensing data detected by a plurality of sensors of the sensing unit 350.

Meanwhile, the defrost controller 670 may receive data 1020 obtained from the detection means 1010 of the air conditioner 50. The defrost controller 670 may store in the internal memory 640 or the external memory 340, 730. Image data 1021 for determining a frosting/normal state and operation data 1022 for determining frosting starting timing may be separately stored.

In addition, the defrost controller 670 or the edge 500 may receive data 1020 transmitted as an input value to each machine learning model from the sensor 1010 attached to various components of the air conditioner 50, and may perform preprocessing for each machine learning model.

The camera module 1011 installed in the outdoor unit heat exchanger 104 may photograph an image of the heat exchanger 104 every set sampling cycle so as to directly observe the frosting phenomenon occurring in the heat exchanger 104 in winter, and then transmit the photographed image of the heat exchanger 104 to the data receiving unit in the form of a batch file. The received image data is processed according to the input data format of the CNN-based frosting detection image classification model. The color channel (RGB channel) is converted to gray scale, and three color channels are also resized to one channel. In addition, the pixel size is readjusted to fit the CNN structure of the frosting detection image classification model. When the preprocessing process of the input batch image file is finished, it may be transmitted as input data of the frosting detection image classification model 1031 as shown in FIG. 10.

Unlike the frosting detection model 1031, a frosting timing prediction model 1032 predicts the upcoming frosting timing based on operation data 1022 collected from the sensor 1012, 1013, 1014 installed in each component of the air conditioner 50. The operation data 1022 of the air conditioner 50 is transmitted to the data receiving unit every set sampling cycle. The data receiving unit removes noise with respect to data received from various sensors by applying a filter for signal processing such as a bandpass filter and a low/high-pass filter, and then exclude inevitable noise generated in various environments where the air conditioner 50 is installed, thereby helping the frosting timing prediction model 1032 to analyze a more clear pattern in the given operation data. In addition, the scale for each factor is adjusted to be uniform (e.g. between 0 and 1) by performing a normalization operation on each sensor data to remove the degree of influence caused by each factor's scale difference, thereby improving the prediction performance of the frosting start timing prediction model.

Since the operation data 1022 coming from the sensors 1012, 1013, and 1014 have different units and ranges for each factor, it is necessary to normalize them to a certain range. For example, if the unit of a pressure gauge such as condensing pressure and evaporation pressure is kPa and the range is an integer type with three to four digits, the discharge temperature of the compressor uses the unit of °C and the range may be a real type between two and three digits. If the factors having different ranges are not normalized, the cost function is distorted due to different scales, and in some cases, the learning of machine learning model may not be performed efficiently, for example, the learning speed may be slow and it may fall into a local minima. The Min-max Normalization formula commonly used for normalization is as follows.

【Equation 1】

$$X_{norm} = \frac{(X - X_{min})(b - a)}{(X_{max} - X_{min})} + a,$$

$$a \le X_{norm} \le b,$$

$X_{norm}$: Normalized input data
$X_{max}$: Maximum input data
$X_{min}$: Minimum input data
(a, b): Normalization range (ex. 0-1)

If the input data is deviated from the minimum and maximum values of the existing learning data, the input data is automatically adjusted to the minimum/maximum value of the existing learning data because it may be deviated from the normalization range when the minimum-maximum normalization is applied, which follows below formula.

【Equation 2】

$$\text{If } X > X_{max}, X_{norm} = b$$
$$\text{If } X < X_{min}, X_{norm} = a$$

The operation data that completed the noise removal and normalization process are transmitted to the frosting start timing prediction unit.

The data preprocessing process performed by the data receiving unit is mainly performed at the edge 500 in the air conditioner system configured with edge computing as shown in FIG. 5, and when the preprocessing process for sensor data is completed at the edge 500, corresponding data is transferred to the cloud server 700 and a machine learning model calculation necessary for detection of frosting and prediction of frosting timing is achieved. Such edge computing is effective if it is introduced when there are many types of sensor data mainly handled and when the expected data load on the cloud server 700 is large.

In the air conditioner system in which AI computing is implemented with a cloud computing structure as shown in FIG. 4, all control logic from the data reception to the detection and prediction of frosting is performed in the cloud server 700. When applying the machine learning models requiring high-performance calculation as shown in FIG. 4 to an existing air conditioner, there is an advantage in that the resources of the cloud server 700 can be utilized even if only a communication module is separately constructed.

In the case of FIGS. 4 and 5, most of the calculations are performed in the cloud server 700 or the edge 500, but if the air conditioner 500 contains a defrost controller 670 having a strong calculation performance, defrost control may be established in an embedded type, so that all processes from data reception to pre-processing, machine learning model calculation, and prediction result derivation can be implemented by using resources inside a controller.

According to an embodiment of the present invention, each component is modularized as shown in FIG. 6, and each module is configured to operate when only input/output data is exchanged therebetween. Therefore, there is an advantage that it can be applied to configuration of all air conditioner system from edge computing to an embedded system of the air conditioner.

The defrost controller 670 may process (1030) data 1020 according to each machine learning model. The frosting detection unit 671 may receive image data 1021 as input data and perform a feed-forward operation on a frosting detection image classification model 1031 to classify whether a corresponding image is in a frosting state image or a normal state image. The frosting start timing prediction unit 672 may receive the operation data 1022 as input data to perform a feed-forward operation on the frosting start point prediction model 1032 and predict the remaining time until the frosting start timing by minute, based on the pattern of corresponding operating data.

The air conditioner 50 may perform an operation based on the determination/prediction of the defrost controller 670 (1051). When the outdoor heat exchanger 104 is determined to be in a frosting state, the defrost control unit 673 may control to perform a defrost operation by starting the defrost control (1051). When the remaining time until the frosting predicted by the frosting start timing prediction unit 672 is less than or equal to a threshold value, the frosting prevention control unit 674 may control to start the frosting prevention control (1052) to perform the frosting prevention operation.

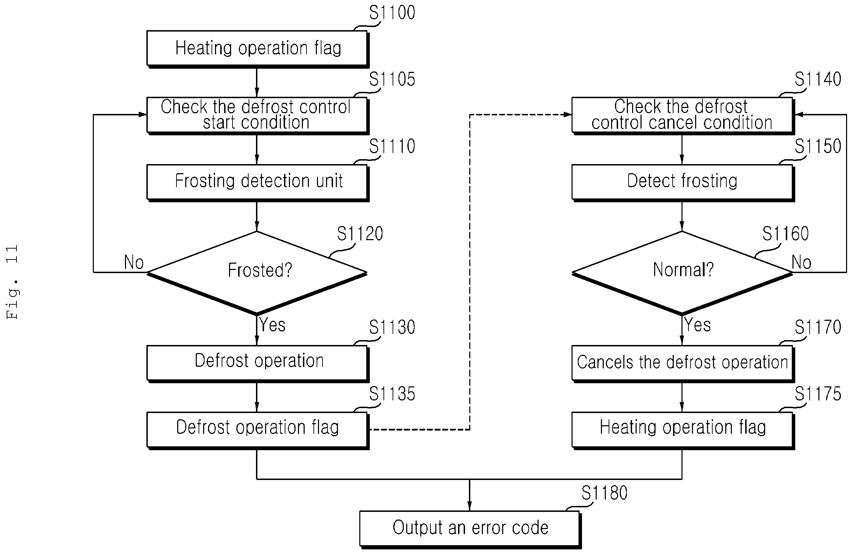

FIG. 11 is a flowchart illustrating a method of operating an air conditioner system according to an embodiment of the present invention, and illustrates a defrost control logic. The defrost control unit 673 may include a defrost control start condition check unit and a defrost control cancel condition check unit.

Referring to FIG. 11, during the heating operation (S1100), the defrost control start condition check unit checks the defrost control start condition (S1105). To this end, the defrost control start condition check unit calls the frosting detection unit 671 every set frosting determination cycle (S1110), and determines whether the air conditioner 50 is frosted (S1120).

At this time, if the frosting detection unit 671 determines that the current state of the air conditioner is a frosting state (S1120), the defrost operation starts (S1130), and if it is determined that it is not a frosting state (S1120), the frosting detection unit 671 is called again in the next calculation cycle to progress a process (S1120) of determining whether it is a frosting state.

Meanwhile, the defrost control unit 673 operates during the heating operation (S1100), and the defrost control does not operate during the cooling operation.

When the frosting detection unit 671 determines that it is a frosting state, the defrost control unit 673 switches the operation mode from heating to defrost, and when switching to defrost operation, it operates to switch from heating operation to cooling operation so as to remove the frosting of heat exchanger in the outdoor unit side (S1130). As the operation mode is changed to a defrost mode, a defrost operation flag S1135 is generated and transmitted to an error code output unit (S1180).

When the operation mode is a defrost mode, the defrost control cancel condition check unit operates (S1140), and the defrost control cancel condition check unit calls the frosting detection unit 671 every set cycle to check whether the state of the air conditioner 50 is changed from a frosting state to a normal state. (S1160).

If the frosting detection unit 671 determines that it is still frosting state (S1160), the frosting detection unit 671 is called again in the next calculation cycle and it is determined again whether the air conditioner 50 has returned to the normal state (S1160). If the state of the air conditioner 50 returns to normal state from the frosting state (S1160), the defrost control unit 673 cancels the defrost operation (S1170), and switches the operation mode from cooling to heating again. At this time, a heating operation flag is generated (S1175), and transmitted to the error code output unit (S1175).

Meanwhile, when the defrost control starts, the defrost control obtains the control priority, so if the frosting prevention control and the defrost control start simultaneously, the defrost control is executed first. If the defrost control is in progress, the frosting prevention control unit 674 holds execution until the cancel of defrost control.

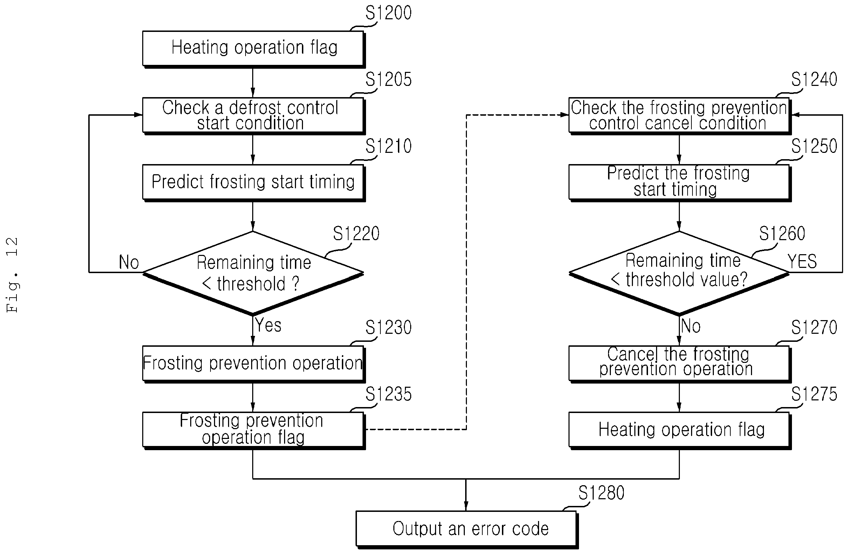

FIG. 12 is a flow chart illustrating a method of operating an air conditioner system according to an embodiment of the present invention, and illustrates a control logic for preventing frosting. The frosting prevention control unit 674 may include a frosting prevention control start condition check unit and a frosting prevention control cancel condition check unit.

Referring to FIG. 12, during a heating operation (S1200), the frosting prevention control start condition check unit checks a defrost control start condition (S1205). To this end, the frosting prevention control start condition check unit calls the frosting start timing prediction unit 672 every set frosting determination cycle, and predicts the remaining time until the next frosting of the air conditioner 50 by minute (S1210). At this time, if the remaining time until the next frosting timing predicted by the frosting start timing prediction unit 672 is less than the set threshold (S1220), the frosting prevention operation starts (S1230), and in the opposite case (S1220), the process of predicting the frosting timing by calling the frosting start timing prediction unit 672 again in the next prediction cycle is repeated (S1210).

Like the defrost control unit 673, the frosting prevention control unit 674 operates during the heating operation, and the frosting prevention control does not operate during the cooling operation. In addition, when the defrost operation flag is generated at the execution timing of the frosting prevention control unit 674, the execution of the frosting prevention control start condition check unit is hold.

The frosting prevention control operation aims to delaying the frosting of the heat exchanger in the outdoor unit side as much as possible by deliberately lowering the outdoor heat exchange rate by setting the compressor frequency to be lower than a control target frequency in normal operation by a predefined value (e.g. operating at 95% of the existing target frequency). At this time, the frosting prevention operation flag is generated (S1235), and transmitted to the error code output unit (S1280).

When the frosting prevention operation flag is generated, the frosting prevention control cancel condition check unit is operated (S1240), and the frosting start timing prediction unit 672 is called every set period (S1250), and it is checked whether the remaining time until the next frosting is lower than the threshold value (S1260).

For example, a corresponding threshold value may be derived experimentally by measuring the average time for frosting by repeatedly executing an experiment of inducing frosting occurrence from when the operating cycle of the air conditioner 50 enters a normal state in a special chamber in which indoor and outdoor temperature conditions and humidity are set to generate the defrost operation condition.

Alternatively, the threshold value may be derived by learning the frosting occurrence timing and operation data using a machine learning model.

When the value predicted by the frosting start timing prediction unit 672 is less than the threshold value (S1260), the frosting start timing prediction unit 672 is called again in the next prediction cycle to check whether the frosting of the air conditioner 50 is imminent. When the occurrence timing of the next frosting of the air conditioner 50 is later than the threshold value (S1260), the frosting prevention operation is canceled (S1270), and the operation mode is switched to the normal heating operation. At this time, a heating operation flag is generated (S1275), and is transmitted to the error code output unit (S1280).

The error code output unit serves to output and notify an error code so as to inform user and maintenance service engineer of the current state of the product when the defrost control or frost prevention control is initiated.

The error code output unit may prevent the defrost operation error code or the frosting prevention operation error code from being displayed any more immediately upon receiving the heating flag.

After receiving the preprocessed image data, the frosting detection unit 671 uses the received image data as input data of the CNN-based frosting detection image classification model 1031 to directly perform a feed forward operation. Through this, the received input data image is classified whether it is a normal image or a frosting image.

The determination of the frosting through such a direct observation has a significant advantage in comparison with conventional rule-based frosting determination logic. In the case of the rule-based frosting determination logic, it detects the physical phenomena on the heating cycle that is changed after frosting is occurred in the outdoor heat exchanger 104, and makes this into a threshold-based rule to determine the presence or absence of frosting. Accordingly, there is a disadvantage in that it is possible to determine the frosting only after a clear difference in the heating cycle pattern has occurred after a considerable amount of time has passed since the actual frosting phenomenon occurred. Due to this, there is a problem in that the frosting logic operates after the heat exchange efficiency has already deteriorated considerably due to the defrost operation, and since the frosting has already progressed to a great extent, it takes a long time to cancel the frosting. In addition, since the logic itself is based on rules, there is a problem in that the accuracy of the frosting determination logic is low because the logic cannot determine frosting even if an actual frosting occurs unless it exceeds the threshold value for determining frosting.

In comparison with the conventional technology, the present invention diagnoses the defrost operation through direct observation using the camera module 355 and the frosting detection image classification model 1051. Accordingly, there is an advantage in that it is possible to quickly and accurately determine the frosting when a frosting occurs in the heat exchanger 104. It has an advantage of being able to easily detect the initial frosting, which is difficult to detect in the existing rule-based frosting logic, by using the CNN structure having verified image classification performance.

In the case of the image classification model 1031 used in the frosting detection unit 671, as shown in FIG. 9, it follows the conventional CNN structure, and extracts patterns (features) of the image through convolutional layers, followed by pooling layer to reduce the dimension of the image to reduce computational speed and memory usage and reduce the number of parameters, thereby avoiding overfitting. This is a structure in which the combination of the convolutional layer and the pooling layer is repeated, and finally passes through the fully-connected layers and ends with two output nodes (normal/frosting). At this time, Rectified Linear Unit (Re-LU) is mainly used as an activation function of each convolutional layer, and a softmax activation function and a cross-entropy cost function are used in the last fully connected layer.

The frosting detection unit 671 performs the frosting determination according to the frosting determination cycle set in the defrost control logic when an execution command is given by the start condition check logic and defrost control cancel logic of the defrost control unit 673.

When determining a frosting, a specific number of instances or more is defined as a batch size, and it is determined whether frosting has occurred with respect to this, thereby securing a statistically meaningful diagnosis result. Since the final output result of the frosting detection image classification model is frosting or normal, the final classification result for a corresponding batch is determined by using mode. At this time, in order to avoid a case in which the frosting determination result is in a tie state, the batch size used in frosting determination is always set to be an odd number.

The frosting start timing prediction unit 672 receives cycle operation data from the data collection unit as input data, performs a feed-forward operation on one or more machine learning models among Random Forest, Deep Neural Network (DNN), and CNN, and predicts the remaining time until the next frosting starting by minute.

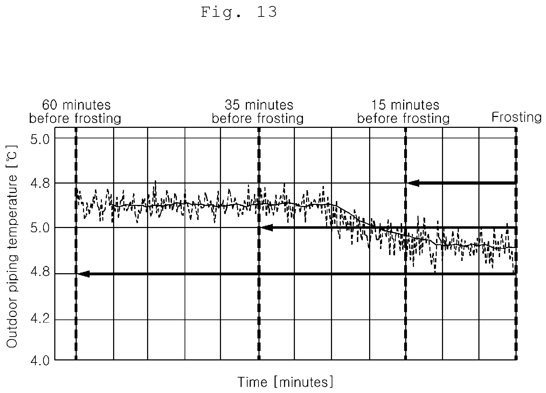

FIG. 13 is a diagram referred to for explaining a method of operating an air conditioner system according to an embodiment of the present invention, and is an example showing the principle of such a prediction model. When the prediction model learned the pattern of frosting data shown in FIG. 13 receives the outdoor unit piping temperature as an input factor, it predicts how many minutes remain from the frosting timing.

The frosting start timing prediction unit 672 predicts the remaining time until the next frosting starting according to the frosting start timing prediction cycle set in the frosting prevention control logic when an execution command is given from the start condition check logic and the frosting prevention control cancel logic of the frosting prevention control unit 674.

When determining the frosting start timing, a specific number of instances or more is defined as a batch size, and the frosting start timing for this is predicted to obtain statistically significant prediction result. The average value is used to derive the final prediction result, and in order to derive a more conservative average value, the average value of the remaining prediction results excluding the maximum and minimum values of the prediction value is selected as the final prediction value of a corresponding frosting start timing calculation cycle. Before transmitting the final prediction value to the frosting prevention control unit 674, the probability distribution of the prediction values is verified once more by calculating the mean and standard deviation which are probability distribution of prediction results used to derive the frosting start timing prediction value. If the variance value is greater than or equal to the set threshold value, it can be considered that the prediction model excessively reflects the noise inherent in the data. Therefore, it is determined that the final prediction result is not reliable, the determination is held in the prediction cycle of corresponding frosting start timing, and the next frosting timing prediction is attempted again in the next prediction cycle.

According to at least one of the embodiments of the present invention, it is possible to quickly and accurately determine whether a heat exchanger is frosted based on an image not on a prediction, and appropriately perform a defrost operation to improve heat exchange and heating efficiency.

In addition, according to at least one of the embodiments of the present invention, by predicting the frosting start timing, it is possible to enhance the efficiency of the heating operation by reducing the number of defrost operation starting and the frosting of the heat exchanger.

The air conditioner system and the operation method according to the present invention are not limited to the configuration and method of the embodiments described above, but all or some of the embodiments may be selectively combined and configured so that various modifications can be achieved as long as in the scope of the claims.

According to at least one of the embodiments of the present invention, it is possible to accurately determine whether the heat exchanger is frosted.

In addition, according to at least one of the embodiments of the present invention, it is possible to improve heat exchange and heating efficiency by appropriately performing a defrost operation.

In addition, according to at least one of the embodiments of the present invention, by predicting the frosting start timing, it is possible to enhance the efficiency of the heating operation by reducing the number of the defrost operation start.

In addition, according to at least one of the embodiments of the present invention, by predicting the frosting start timing, it is possible to enhance the efficiency of the heating operation by reducing the frosting of the heat exchanger.

## Claims

1. An air conditioner system comprising:

    an air conditioner (50) comprising a compressor, an outdoor heat exchanger configured to perform heat exchange using a refrigerant discharged from the compressor, a camera module (355) configured to photograph the outdoor heat exchanger to obtain a digital image of the outdoor heat exchanger , a sensing unit (350) which has a plurality of sensors, and a communication unit (360) configured to transmit image data of the image of the outdoor heat exchanger photographed by the camera module (355) and sensing data detected by the sensing unit (350); and
    a server (700) comprising a communication unit (720) configured to receive the transmitted image data and the transmitted sensing data , and a defrost controller (670) configured to determine whether the outdoor heat exchanger is frosted based on the image data, and predict a frosting timing based on the sensing data, wherein the defrost controller (670) comprises:

       a frosting detection unit (671) configured to classify the image data of the outdoor heat exchanger into image data of frosting and normal states, by using a Convolutional Neural Network, CNN,-based image classification model; and
       a frosting start timing prediction unit (672) configured to predict a remaining time until frosting, by using one or more machine learning models, when cycle operation data of the air conditioner (50) is input,
       a defrost control unit (673) configured to control the air conditioner (50) to perform a defrost operation when the frosting detection unit (671) determines a frosting state;
       a frosting prevention control unit (674) configured to control to perform a frosting prevention operation, when the remaining time until frosting predicted by the frosting start timing prediction unit (672) is less than or equal to a threshold value, and
       wherein the air conditioner system is configured such that in the defrost operation, when the air conditioner (50) was in a heating operation, the air conditioner (50) is switched to a cooling operation to operate until the frosting detection unit determines a normal state, and in the frosting prevention operation, the compressor is driven at an operating frequency lower than an operating frequency of the compressor of a normal state.

2. The air conditioner system of claim 1, wherein the communication unit (660) of the server (700) transmits a control signal output from the defrost control unit (670) or the frosting prevention control unit to the air conditioner (50), and
the air conditioner (50) is controlled to perform the defrost operation or the frosting prevention operation based on a control signal received from the server (700).

3. The air conditioner system of any one of claims 1 or 2, wherein the defrost controller (670) comprises:

    an error code output unit (635) configured to generate a corresponding error code, when the defrost operation or the frost prevention operation is performed; and
    a memory (640) configured to store the error code.

4. The air conditioner system of any one of claims 1 to 3, wherein the defrost controller (670) further includes a data receiving unit configured to convert a pixel size and gray scale of the image data of the outdoor heat exchanger.

5. The air conditioner system of claim 4, wherein the data receiving unit receives the sensing data from the sensing unit (350) every set sampling cycle, and removes noise.

6. The air conditioner system of any one of claims 1 to 3, further comprising an edge (500) configured to convert a pixel size and gray scale of the image data of the outdoor heat exchanger.

7. The air conditioner system of claim 6, wherein the edge (500) receives the sensing data from the sensing unit (350) every set sampling cycle, and removes noise.

8. A method of operating an air conditioner system, the method comprising:

    determining whether an outdoor heat exchanger is frosted based on image data of the outdoor heat exchanger photographed by a camera module (355);
    performing a defrost operation when the outdoor heat exchanger is determined to be in a frosting state;

predicting a frosting timing based on sensing data detected by a plurality of sensors; and

performing a frosting prevention operation when a remaining time until frosting predicted by a frosting start timing prediction unit (672) is less than or equal to a threshold value,

wherein determining whether an outdoor heat exchanger is frosted comprises classifying image data of the outdoor heat exchanger into image data of frosting and normal states, by using a Convolutional Neural Network, CNN,-based image classification model, and

wherein predicting a frosting timing comprises predicting a remaining time until frosting, by using one or more machine learning models, when cycle operation data of the air conditioner (50) is input,

wherein the method further comprises

generating a corresponding error code when the defrost operation or the frosting prevention operation is performed; and

storing the error code; and

wherein in the defrost operation, when the air conditioner (50) was in a heating operation, the air conditioner (50) is switched to a cooling operation to operate until the frosting detection unit (671) determines a normal state, and in the frosting prevention operation, the compressor is driven at an operating frequency lower than an operating frequency of the compressor of a normal state.

9. The method of claim 8, further comprising:

converting a pixel size and gray scale of the image data of the outdoor heat exchanger; and removing noise of the sensing data.

**Patentansprüche**

1. Klimaanlagensystem, das aufweist:

eine Klimaanlage (50), die einen Verdichter, einen Außenwärmetauscher, der konfiguriert ist, einen Wärmeaustausch unter Verwendung eines aus dem Verdichter abgegebenen Kältemittels durchzuführen, ein Kameramodul (355), das konfiguriert ist, den Außenwärmetauscher zu fotografieren, um ein digitales Bild des Außenwärmetauschers zu erhalten, eine Erfassungseinheit (350), die mehrere Sensoren aufweist, und eine Kommunikationseinheit (360) aufweist, die konfiguriert ist, Bilddaten des vom Kameramodul (355) fotografierten Bildes des Außenwärmetauschers und von der Erfassungseinheit (350) erfasste Erfassungsdaten zu übertragen; und

einen Server (700), der eine Kommunikationseinheit (720) aufweist, die konfiguriert ist, die übertragenen Bilddaten und die übertragenen Erfassungsdaten zu empfangen, und eine Enteisungssteuerung (670), die konfiguriert ist, basierend auf den Bilddaten zu bestimmen, ob der Außenwärmetauscher vereist ist, und basierend auf den Erfassungsdaten einen Vereisungszeitpunkt vorherzusagen,

wobei der Enteisungssteuerung (670) aufweist:

eine Vereisungserkennungseinheit (671), die konfiguriert ist, die Bilddaten des Außenwärmetauschers in Bilddaten von Vereisungs- und Normalzuständen zu klassifizieren, unter Verwendung

eines auf einem neuronalen Faltungsnetzwerk, CNN, basierenden Bildklassifizierungsmodells; und

einer Vereisungsstartzeit-Vorhersageeinheit (672), die konfiguriert ist, eine verbleibende Zeit bis zur Vereisung unter Verwendung eines oder mehrerer maschineller Lernmodelle vorherzusagen, wenn Zyklusbetriebsdaten der Klimaanlage (50) eingegeben werden,

eine Enteisungssteuereinheit (673), die konfiguriert ist, die Klimaanlage (50) zu steuern,

einen Enteisungsbetrieb durchzuführen, wenn die Vereisungserkennungseinheit (671) einen Vereisungszustand feststellt;

eine Vereisungsverhinderungs-Steuereinheit (674), die konfiguriert ist, die Durchführung eines Vereisungsverhinderungsbetriebs zu steuern, wenn die verbleibende Zeit bis zur Vereisung, die von der Vereisungsstart-Zeitvorhersageeinheit (672) vorhergesagt wird, kleiner als oder gleich einem Schwellenwert ist, und

wobei das Klimaanlagensystem so konfiguriert ist, dass im Enteisungsbetrieb, wenn sich die Klimaanlage (50) in einem Heizbetrieb befand, die Klimaanlage (50) in einen Kühlbetrieb umgeschaltet wird, um zu arbeiten, bis die Vereisungserkennungseinheit einen normalen Zustand bestimmt, und im Vereisungsverhinderungsbetrieb der Verdichter mit einer Betriebsfrequenz angetrieben wird, die niedriger als eine Betriebsfrequenz des Verdichters eines normalen Zustands ist.

2. Klimaanlagensystem nach Anspruch 1, wobei die Kommunikationseinheit (660) des Servers (700) ein von der Enteisungssteuereinheit (670) oder der Vereisungsverhinderungssteuereinheit ausgegebenes Steuersignal an die Klimaanlage (50) überträgt, und

die Klimaanlage (50) gesteuert wird, den Enteisungsbetrieb oder den Vereisungsverhinderungsbetrieb basierend auf einem vom Server (700) empfangenen Steuersignal durchzuführen.

3. Klimaanlagensystem nach einem der Ansprüche 1 oder 2, wobei die Enteisungssteuerung (670) aufweist:

eine Fehlercode-Ausgabeeinheit (635), die konfiguriert ist, einen entsprechenden Fehlercode zu erzeugen, wenn der Enteisungsbetrieb oder der Vereisungsverhinderungsbetrieb durchgeführt wird; und
einen Speicher (640), der zum Speichern des Fehlercodes konfiguriert ist.

4. Klimaanlagensystem nach einem der Ansprüche 1 bis 3, wobei die Enteisungssteuerung (670) ferner eine Datenempfangseinheit aufweist, die konfiguriert ist, eine Pixelgröße und Grauskala der Bilddaten des Außenwärmetauschers umzuwandeln.

5. Klimaanlagensystem nach Anspruch 4, wobei die Datenempfangseinheit die Erfassungsdaten von der Erfassungseinheit (350) in jedem festgelegten Erfassungszyklus empfängt und Rauschen entfernt.

6. Klimaanlagensystem nach einem der Ansprüche 1 bis 3, das ferner eine Kante (500) aufweist, die konfiguriert ist, eine Pixelgröße und Grauskala der Bilddaten des Außenwärmetauschers umzuwandeln.

7. Klimaanlagensystem nach Anspruch 6, wobei die Kante (500) die Erfassungsdaten von der Erfassungseinheit (350) in jedem festgelegten Erfassungszyklus empfängt und Rauschen entfernt.

8. Verfahren zum Betreiben eines Klimaanlagensystems, das aufweist:

Bestimmen, ob ein Außenwärmetauscher vereist ist, basierend auf Bilddaten des Außenwärmetauschers, der von einem Kameramodul (355) fotografiert wird;
Durchführen eines Enteisungsbetriebs, wenn festgestellt wird, dass sich der Außenwärmetauscher in einem vereisten Zustand befindet;
Vorhersagen eines Vereisungszeitpunkts basierend auf Erfassungsdaten, die von mehreren Sensoren erfasst werden; und
Durchführen eines Vereisungsverhinderungsbetriebs, wenn eine verbleibende Zeit bis zu einer Vereisung, die von einer Vereisungsstartzeit-Vorhersageeinheit (672) vorhergesagt wird, kleiner oder gleich einem Schwellenwert ist,

wobei das Bestimmen, ob ein Außenwärmetauscher vereist ist, das Klassifizieren von Bilddaten des Außenwärmetauschers in Bilddaten von Vereisungs- und Normalzuständen aufweist, indem ein auf einem neuronalen Faltungsnetzwerk, CNN, basierendes Bildklassifikationsmodell verwendet wird, und

wobei das Vorhersagen eines Vereisungszeitpunkts das Vorhersagen einer verbleibenden Zeit bis zur Vereisung aufweist, indem ein oder mehrere maschinelle Lernmodelle verwendet werden, wenn Zyklusbetriebsdaten der Klimaanlage (50) eingegeben werden, wobei das Verfahren ferner aufweist:

Erzeugen eines entsprechenden Fehlercodes, wenn der Enteisungsbetrieb oder der Vereisungsverhinderungsbetrieb durchgeführt wird; und
Speichern des Fehlercodes; und
wobei im Enteisungsbetrieb, wenn sich die Klimaanlage (50) in einem Heizbetrieb befand, die Klimaanlage (50) in einen Kühlbetrieb umgeschaltet wird, um zu arbeiten, bis die Vereisungserkennungseinheit (671) einen normalen Zustand bestimmt, und im Vereisungsverhinderungsbetrieb der Verdichter mit einer Betriebsfrequenz angetrieben wird, die niedriger ist als eine Betriebsfrequenz des Verdichters eines normalen Zustands.

9. Verfahren nach Anspruch 8, das ferner aufweist:

Umwandeln einer Pixelgröße und Grauskala der Bilddaten des Außenwärmetauschers; und
Entfernen des Rauschens der Erfassungsdaten.

**Revendications**

1. Système de climatisation, comprenant :

un climatiseur (50) comprenant un compresseur, un échangeur de chaleur extérieur prévu pour effectuer un échange de chaleur au moyen d'un réfrigérant déchargé du compresseur, un module de caméra (355) prévu pour photographier l'échangeur de chaleur extérieur afin d'obtenir une image numérique de l'échangeur de chaleur extérieur, une unité de détection (350) pourvue d'une pluralité de capteurs, et une unité de communication (360) prévue pour transmettre des données d'image de l'image de l'échangeur de chaleur extérieur photographié par le module de caméra (355) et des données de détection détectées par l'unité de détection (350) ; et

un serveur (700) comprenant une unité de communication (720) prévue pour recevoir les données d'image transmises et les données de détection transmises, et un contrôleur de dégivrage (670) prévu pour déterminer si l'échangeur de chaleur extérieur est givré sur la base des données d'image, et prévoir un temps de givrage sur la base des données de détection, où le contrôleur de dégivrage (670) comprend :

une unité de détection de givrage (671) prévue pour classer les données d'image de l'échangeur de chaleur extérieur en données d'image d'état de givrage et d'état normal, au moyen d'un modèle de classement d'images basé sur un réseau neuronal convolutif (CNN) ; et

une unité de prévision du temps de début de givrage (672) prévue pour prévoir le temps restant avant le givrage, au moyen d'un ou de plusieurs modèles d'apprentissage automatique, lorsque les données de fonctionnement cyclique du climatiseur (50) sont saisies,

une unité de commande de dégivrage (673) prévue pour commander le climatiseur (50) afin d'exécuter un processus de dégivrage lorsque l'unité de détection de givrage (671) détermine un état de givrage ;

une unité de commande de prévention du givrage (674) prévue pour commander l'exécution d'un processus de prévention du givrage, lorsque le temps restant avant le givrage prévu par l'unité de prévision du temps de début de givrage (672) est inférieur ou égal à une valeur seuil, et

où le système de climatisation est prévu de sorte que, lors du processus de dégivrage, si le climatiseur (50) était en mode de chauffe, le climatiseur (50) est commuté en mode de refroidissement pour fonctionner jusqu'à ce que l'unité de détection de givrage détermine un état normal, et que, lors du processus de prévention du givrage, le compresseur est commandé à une fréquence de fonctionnement inférieure à une fréquence de fonctionnement du compresseur dans un état normal.

2. Système de climatisation selon la revendication 1, où l'unité de communication (660) du serveur (700) transmet au climatiseur (50) un signal de commande émis par l'unité de commande de dégivrage (670) ou l'unité de commande de prévention du givrage, et où le climatiseur (50) est commandé pour exécuter le processus de dégivrage ou le processus de prévention du givrage sur la base d'un signal de commande reçu du serveur (700).

3. Système de climatisation selon la revendication 1 ou la revendication 2, où le contrôleur de dégivrage (670) comprend :

une unité de sortie de code d'erreur (635) prévue pour générer un code d'erreur correspondant, lorsque le processus de dégivrage ou le processus de prévention du givrage est exécuté ; et une mémoire (640) prévue pour stocker le code d'erreur.

4. Système de climatisation selon l'une des revendications 1 à 3, où le contrôleur de dégivrage (670) comprend en outre une unité de réception de données prévue pour convertir une taille de pixel et une échelle de gris des données d'image de l'échangeur de chaleur extérieur.

5. Système de climatisation selon la revendication 4, où l'unité de réception des données reçoit les données de détection de l'unité de détection (350) à chaque cycle d'échantillonnage défini, et supprime le bruit.

6. Système de climatisation selon l'une des revendications 1 à 3, comprenant en outre un bord (500) prévu pour convertir une taille de pixel et une échelle de gris des données d'image de l'échangeur de chaleur extérieur.

7. Système de climatisation selon la revendication 6, où le bord (500) reçoit les données de détection de l'unité de détection (350) à chaque cycle d'échantillonnage défini, et supprime le bruit.

8. Procédé de fonctionnement d'un système de climatisation, comprenant :

la détermination si un échangeur de chaleur extérieur est givré sur la base des données d'image de l'échangeur de chaleur extérieur photographié par un module de caméra (355) ; l'exécution d'un processus de dégivrage s'il est déterminé que l'échangeur de chaleur extérieur est en état de givrage ; la prévision du temps de givrage sur la base des données détectées par une pluralité de capteurs ; et l'exécution d'un processus de prévention du givrage lorsque le temps restant avant le givrage prévu par une unité de prévision du temps de début de givrage (672) est inférieur ou égal à une valeur seuil, où la détermination si un échangeur de chaleur extérieur est givré comprend le classement des données d'image de l'échangeur de chaleur extérieur en données d'image d'état de givrage et d'état normal, au moyen d'un modèle de classement d'image basé sur un réseau neuronal convolutif (CNN), et

où la prévision d'un temps de givrage comprend la prévision d'un temps restant avant le givrage, au moyen d'un ou de plusieurs modèles d'apprentissage automatique, lorsque les données de fonctionnement cyclique du climatiseur (50) sont saisies,

ledit procédé comprenant en outre

la génération d'un code d'erreur correspondant lorsque le processus de dégivrage ou le processus de prévention du givrage est exécuté ; et

la mémorisation du code d'erreur ; et

où, lors du processus de dégivrage, si le climatiseur (50) était en mode de chauffe, le climatiseur (50) est commuté en mode de refroidissement pour fonctionner jusqu'à ce que l'unité de détection de givrage (671) détermine un état normal, et où, lors du processus de prévention de givrage, le compresseur est commandé à une fréquence de fonctionnement inférieure à une fréquence de fonctionnement du compresseur dans un état normal.

9. Procédé selon la revendication 8, comprenant en outre

la conversion d'une taille de pixel et d'une échelle de gris des données d'image de l'échangeur de chaleur extérieur ; et

la suppression du bruit des données de détection.

Fig. 1

Fig. 2

Fig. 3

50

320
Input unit

370

350
Sensing unit

355
Camera module

360
Communication unit

340
Memory

Controller

381
Outdoor fan drive unit

105a
Outdoor fan

382
Indoor fan drive unit

109a
Indoor fan

383
Compressor drive unit

102
Compressor

310
Valve controller

311
Various valves

330
Display unit

Fig. 4

Fig. 5

Fig. 6

600

670

660

Communication unit

671
Frosting detection unit

673
Defrost control unit

672
Frosting start timing prediction unit

674
Frosting prevention control unit

635
Output unit

640
Memory

Fig. 7

700

720
Communication unit

710
Processor

730
Memory

Fig. 8

Fig. 9

Fig. 10

Fig. 11

Fig. 12

```
                    S1200
    ┌──────────────────────┐
    │ Heating operation flag │
    └──────────────────────┘
                │              S1205
                ▼
    ┌──────────────────────┐
    │ Check a defrost control │
    │    start condition      │
    └──────────────────────┘
                │              S1210
                ▼
    ┌──────────────────────┐
    │ Predict frosting start timing │
    └──────────────────────┘
                │
                ▼              S1220
          ◇───────────◇
   No    Remaining time
 ◄───── < threshold ?
          ◇───────────◇
                │ Yes          S1230
                ▼
    ┌──────────────────────┐
    │ Frosting prevention operation │
    └──────────────────────┘
                │              S1235
                ▼
    ┌──────────────────────┐
    │ Frosting prevention    │
    │   operation flag       │
    └──────────────────────┘


                    S1240
    ┌──────────────────────────┐
    │ Check the frosting prevention │
    │  control cancel condition     │
    └──────────────────────────┘
                │              S1250
                ▼
    ┌──────────────────────┐
    │ Predict the frosting  │
    │   start timing        │
    └──────────────────────┘
                │
                ▼              S1260
          ◇───────────◇
         Remaining time      YES
        < threshold value?  ─────►
          ◇───────────◇
                │ No           S1270
                ▼
    ┌──────────────────────┐
    │ Cancel the frosting   │
    │  prevention operation │
    └──────────────────────┘
                │              S1275
                ▼
    ┌──────────────────────┐
    │ Heating operation flag │
    └──────────────────────┘


                    S1280
    ┌──────────────────────┐
    │ Output an error code  │
    └──────────────────────┘
```

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140110355
- KR 1020180124556
- CN 110715401 A